# EUROPÄISCHE PATENTANMELDUNG

(11) **EP 2 733 179 A1**
(43) Veröffentlichungstag der Anmeldung: **21.05.2014**
(21) Anmeldenummer: 12193177.8
(22) Anmeldetag: 19.11.2012
(51) Int. Cl.: C09D 4/00, C09D 123/08

(54) **Mischungen für die beschichtung von metalloberflächen enthaltend organische korrosionsinhibitoren**

(71) Anmelder: BASF SE, 67056 Ludwigshafen (DE)
(72) Erfinder: Schade, Christian, 67063 Ludwigshafen (DE); Mäder, Christian, 68535 Edingen-Neckarhausen (DE); Dr. Witteler, Helmut, 67157 Wachenheim (DE)

(57) **Zusammenfassung**

Verfahren zum Beschichten metallischer Oberflächen, bei dem man die metallische Oberfläche mit einer wässrigen Copolymer-Dispersion in Kontakt bringt, wobei die wässrige Copolymer-Dispersion eine effektive Menge organischer phosphorhaltiger Korrosionsinhibitoren enthält, und wobei die in der Dispersion enthaltenen Copolymere aufgebaut sind aus von 20 bis 95 Gew. % monoethylenisch ungesättigte Kohlenwasserstoffe und/oder Kohlenwasserstoffe mit zwei konjugierten Doppelbindungen, von 5 bis 80 Gew. % monoethylenisch ungesättigte Monomere, welche Säuregruppen aufweisen und/oder deren Anhydride oder Salze. Mit einem Copolymer beschichtete metallische Oberfläche, erhältlich nach solchen Verfahren, die weiterhin noch eine oder mehrere übereinander aufgebrachte Lackschichten umfassen kann.

## Beschreibung

Die vorliegende Erfindung betrifft Verfahren zum Beschichten metallischer Oberflächen, bei denen man die metallische Oberfläche mit wässrigen Copolymer-Dispersionen in Kontakt bringt. Weiterhin betrifft die Erfindung mit Copolymeren beschichtete metallische Oberflächen sowie die Verwendung von wässrigen Copolymer-Dispersionen zur Beschichtung metallischer Oberflächen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt beziehungsweise ganz bevorzugt sind insbesondere auch diejenigen Ausführungsformen der vorliegenden Erfindung, in denen alle Merkmale des erfindungsgemäßen Gegenstandes die bevorzugten beziehungsweise ganz bevorzugten Bedeutungen haben.

Die Beschichtung von Oberflächen durch wässrige Copolymer-Dispersionen ist bekannt.

WO 2004/108601 A1 beschreibt die Verwendung von wässrigen Dispersionen, enthaltend mindestens ein zumindest partiell neutralisiertes Ethylencopolymerwachs, gewählt aus solchen Ethylencopolymerwachsen, die als Comonomere einpolymerisiert enthalten (A) 26,1 bis 39 Gew.-% mindestens einer ethylenisch ungesättigten Carbonsäure und (B) 61 bis 73,9 Gew.-% Ethylen, und solchen Ethylencopolymerwachsen, die einpolymerisiert enthalten (A') 20,5 bis 38,9 Gew.-% mindestens einer ethylenisch ungesättigten Carbonsäure, (B') 60 bis 79,4 Gew.-% Ethylen und (C') 0,1 bis 15 Gew.-% mindestens eines ethylenisch ungesättigten Carbonsäureesters, als Hilfsmittel für die Abwasseraufbereitung. Die partiell neutralisierten EthylenCopolymer Wachse werden mit einer basischen Substanz, vorzugsweise einem Amin, zumindest teilneutralisiert. Die basische Substanz kann auch ein Carbonat und/oder Hydrogencarbonat eines Alkalimetalls sein. Eine Ausrüstung derartiger Dispersionen mit weiteren Additiven wird nicht beschrieben.

In der WO 2008/092853 A1 wird ein Verfahren zur Beschichtung von Oberflächen durch Behandlung mit einer im wesentlichen Paraffin-freien Formulierung beschrieben, die ein zumindest partiell mit einem Alkalimetall neutralisiertes Copolymer aus Ethylen und 25,5 - 35 Gew.-% einer ethylenisch ungesättigten Carbonsäure enthält. Die Formulierung enthält weiterhin mindestens ein nichtionisches oder anionisches Tensid, mindestens einen Entschäumer und gegebenenfalls weitere Komponenten. Die basische Komponente kann auch ein Carbonat und/oder Hydrogencarbonat eines Alkalimetalls sein. Eine Ausrüstung derartiger Dispersionen mit weiteren Additiven wird nicht beschrieben.

WO 2007/137963 A1 beschreibt ein Verfahren zur Beschichtung von Kunststoff- oder Metalloberflächen mit einer wässrigen Dispersion aus Ethylencopolymeren mit einer Molmasse im Bereich von 2.000 - 20.000 g/mol, die 15,5 - 19,9 Gew.-% einer ethylenisch ungesättigten Carbonsäure copolymerisiert enthalten und mindestens eine Base enthalten, wobei die beschichteten Oberflächen mit mindestens einer weiteren Schicht versehen werden. Beispiele für die ausgewählte Base sind Alkalimetallsalze und besonders bevorzugt Amine. Als geeignete weitere Additive werden Korrosionsschutzpigmente, insbesondere Zn-Salze oder organische Korrosionsschutzinhibitoren erwähnt. Eine genauere Beschreibung dieser Additive erfolgt nicht.

In der WO 2006/066824 A1 wird ein Verfahren zum Beschichten metallischer Oberflächen mit einem Copolymer aus Olefinen und/oder Dienen, sauren Monomeren sowie optional weiteren Monomeren beschrieben, wobei die Metalloberflächen mit Öl und/oder Fett kontaminiert sind und die Kontamination vor dem Beschichten nicht entfernt wird. Die verwendeten Polymere werden durch eine Base neutralisiert Die verwendeten Formulierungen können optional weitere Komponenten umfassen, beispielsweise Korrosionsinhibitoren. Es erfolgt keine weitere Beschreibung dieser Komponenten.

WO 98/10023 beschreibt die Verwendung wässriger Polymerisatdispersionen aus einem Polymerisat aus einem Olefin und einem sauren Comonomer, wenigstens einem Farbmittel und/oder einem Korrosionsinhibitor für den Schutz metallischer Oberflächen vor Korrosion. Vorzugsweise sind die verwendeten Korrosionsschutzmittel in der Wasserphase nicht lösliche Pigmente, die die Transparenz und Oberflächeneigenschaften der Filme begrenzen. Hinweise auf die Nutzung von Phosphor-haltigen organischen Korrosionsschutzinhibitoren gibt diese Schrift nicht.

Die vorbeschriebenen Dispersionen sind im Hinblick auf den Korrosionsschutz von metallischen Oberflächen, insbesondere bezüglich der Passivierung von Oberflächen enthaltend Stahl und/oder Zink oder Zink-enthaltende Legierungen noch verbesserungsbedürftig.

Aufgabe der Erfindung war es eine verbesserte Verfahren zur Behandlung metallischer Oberflächen bereitzustellen, die insbesondere vorteilhaft bei der Passivierung von Oberflächen enthaltend Stahl und/oder Zink oder Zink-enthaltende Legierungen angewendet werden kann.

Diese und andere Aufgaben werden, wie aus dem Offenbarungsgehalt der vorliegenden Erfindung ersichtlich, durch die verschiedenen Ausführungsformen der erfindungsgemäßen Zubereitungen gelöst.

Ein Gegenstand der Erfindung ist daher ein Verfahren zum Beschichten metallischer Oberflächen, bei dem man die metallische Oberfläche mit einer wässrigen Copolymer-Dispersion in Kontakt bringt, dadurch gekennzeichnet, dass die wässrige Copolymer-Dispersion eine effektive Menge organischer phosphorhaltiger Korrosionsinhibitoren (K1) enthält, und wobei die in der Dispersion enthaltenen Copolymere aus folgenden Komponenten aufgebaut sind:
(A) von 20 bis 95 Gew. % monoethylenisch ungesättigte Kohlenwasserstoffe und/oder Kohlenwasserstoffe mit zwei konjugierten Doppelbindungen,
(B) von 5 bis 80 Gew. % monoethylenisch ungesättigte Monomere, welche Säuregruppen aufweisen und/oder deren Anhydride oder Salze.

Die Menge der Komponenten (A) und (B) ist hierbei bezogen auf die Gesamtmenge der Komponenten (A) und (B). Die Gesamtmenge der Komponenten (A) und (B) beträgt hierbei 100 Gew.-%. Bevorzugt liegen die Komponenten (A) im Bereich von 20 bis 95 Gew.-% und (B) im Bereich von 5 bis 50 Gew.-%.

Überraschenderweise wurde gefunden, dass mit dem erfindungsgemäßen Verfahren behandelte Metalloberflächen deutlich resistenter gegen Korrosion sind, als solche gemäß dem Stand der Technik.

Unter einer wässrigen Copolymer-Dispersion werden im Rahmen der vorliegenden Erfindung Mischungen enthaltend Wasser und Copolymere verstanden. Das Wasser ist hierbei in einem wässrigen Lösungsmittelgemisch vorhanden, bevorzugt besteht das wässrige Lösungsmittelgemisch im Wesentlichen, besonders bevorzugt vollständig aus Wasser. Das Copolymer kann im wässrigen Lösungsmittelgemisch dispergiert, emulgiert oder auch molekular gelöst vorliegen.

Das wässrige Lösungsmittelgemisch enthält bevorzugt von 75 Gew.-% bis 100 Gew.-% Wasser. Optional kann das wässrige Lösungsgemisch neben Wasser auch organische Lösungsmittel enthalten. Die organischen Lösungsmittel enthalten bevorzugt Verbindungen ausgewählt aus der Gruppe der Alkohole, Ether, Ester, Ketone, oder Amide. Derartige organische Lösungsmittel werden häufig als Bestandteil von Lacken eingesetzt und sind dem Fachmann aus dem Stand der Technik bekannt. Beispiele solcher Lösungsmittel sind Alkohole wie Methanol, Ethanol, Propanol, Butanol, Phenoxypropanol, oder Ethylenglycol, Ketone wie Aceton, Methylethylketon, Cyclohexanon, oligomere und gegebenenfalls teilveretherte Alkylenglycolether wie beispielsweise Diethylenglycol, Triethylenglycol, Tetraethylenglycol, Butylglycol, Butyldiglycol, 2,2,4-Trimethyl-1,3-pentandiolmonoisobutyrat, dimerisiertes Butylglycol, Dipropylenglycol-n-butylether, Dipropylenglycol-dimethylether, Ester wie die Dimethylester von Adipinsäure, Bernsteinsäure, Glutarsäure und ihre Gemische, 2-Ethylhexyllactat, Butylphthalat, Dibutylphthalat, Amide wie Dimethylacetoacetamid, N-Methylpyrrolidon oder N,N-Dimethyllactamid. In geringen Mengen können auch nicht mit Wasser mischbare Lösungsmittel eingesetzt werden, beispielsweise Kohlenwasserstoffe. Die geringen Mengen werden dabei so gewählt, dass keine sichtbare zusätzliche Phase gebildet wird; üblicherweise beträgt die geringe Menge weniger als 5 Gew.-% bezogen auf die gesamte Mischung.

Bevorzugt liegen die Copolymere im wässrigen Lösungsmitelgemisch in weitgehend molekulardisperser Form oder in Form einer sehr feinteiligen Dispersion mit einer mittleren Teilchengröße von unter 100 nm, bestimmt durch dynamische Lichtstreuung gemäß DIN ISO 13321, vor. D.h., sie führen nicht zu deutlichen Veränderungen der Transparenz des wässrigen Lösungsmittels oder gar zur Bildung eines Bodensatzes.

Bevorzugt weisen die Copolymere Molekulargewichte M_{w} (Gewichtsmittel) von über 20000 g/mol auf, ganz bevorzugt von über 50000 g/mol. Insbesondere liegen die Molekulargewichte der Copolymere im Bereich von 20000 g/mol bis 200000 g/mol, ganz besonders bevorzugt von 50000 g/mol bis 200000 g/mol.

In einer bevorzugten Ausführungsform des erfindungsgemäßen Verfahrens enthalten die in der Dispersion enthaltenen Copolymere als eine weitere Komponente:
(C) von 0 bis 30 Gew. % von (A) und (B) verschiedene, ethylenisch ungesättigte Monomere.

Die Menge der Komponenten (A), (B) und (C) ist hierbei bezogen auf die Gesamtmenge der Komponenten (A), (B) und (C). Die Gesamtmenge der Komponenten (A), (B) und (C) beträgt hierbei 100 Gew.-%.

In einer weiteren bevorzugten Ausführungsform des erfindungsgemäßen Verfahrens liegt die die Gesamtmenge an organischen phosphorhaltigen Korrosionsinhibitoren (K1) im Bereich von 0,1 bis 20 Gew.-%, bezogen auf die Menge an Coolymeren, bevorzugt im Bereich von 0,2 bis 10 %, besonders bevorzugt in dem Bereich von 0,4 bis 5 Gew.-%.

Bevorzugt werden im Rahmen des erfindungsgemäßen Verfahrens als organische phosphorhaltige Korrosionsinhibitoren (K1) Phosphinate, Phosphonate oder Phosphate eingesetzt, die mindestens ein C-Atom enthalten, wobei die organischen phosphorhaltigen Korrosionsinhibitoren (K1) als freie Säuren oder in Form ihrer Salze eingesetzt werden können.

Ganz bevorzugt handelt es sich bei den organischen phosphorhaltigen Korrosionsinhibitoren (K1) um
- Etidronsäure, 2-Carboxyethyl-phosphonsäure, Bis(2,4,4-trimethylpentyl)phosphinsäure, (2,4,4-trimethylpentyl)phosphonsäure, 2-Phosphono-1,2,4-butan-tricarbonsäure, Phytinsäure,
- Mono- und Dialkylphosphate oder die entsprechenden Phosphonate, beispielsweise 2-Ethylhexyl-, Ethyl-, Butyl-, Amyl-, Octyl-, iso-Octyl-, Decyl-, Dodecyl-, Diethyl- oder Di-(2-ethylhexyl)-phosphat,
- Aminomethylenphosphonsäuren wie beispielsweise Ethylen-diamin-tetra(methylen-phosphonsäure), Aminotrimethylene-phosphonsäure, Ethanolamin-bis(methylen-phosphonsäure), Diethylen-triamin-penta(methylen-phosphonsäure), Bis-hexamethylen-triamin-penta(methylen-phosphonsäure), Hexamethylen-diamin-tetra(methylen-phosphonsäure),
- Phosphonsäure-[(tetrahydro-2-hydroxy.4H-1,4,2-oxazaphosphorin-4-yl)methyl]-P-oxide, oder
- Myristamidopropylphosphorsäure.

Weiterhin ganz bevorzugt handelt es sich bei den organischen phosphorhaltigen Korrosionsinhibitoren (K1) um Polymere von Alkylenoxiden, die zu Mono- oder Di-Phosphatestern umgesetzt wurden oder um Alkohole, die zu Phosphorsäureestern umgesetzt wurden. Diese Alkohole sind dabei bevorzugt Verbindungen mit 2 - 32 C-Atomen, insbesondere solche mit 2 - 22 C-Atomen.

In einer weiteren bevorzugten Ausführungsform des erfindungsgemäßen Verfahrens enthalten die wässrige Copolymer-Dispersion eine effektive Menge weiterer Korrosionsinhibitoren (K2), die von den Korrosionsinhibitoren (K1) verschieden sind. Bevorzugt sind als weitere Korrosionsinhibitoren (K2) Alkylenbernsteinsäureamide, Alkenylbernsteinsäureester, Alkenylbernsteinsäurehablester, Triazin-triyl-triiminocarbonsäuren, Benzylpyridin-3-carboxylate, Benzo- und Tolyltriazol und wasserlösliche Derivate, Thioharnstoffe und Mercaptane, die ggf. mit Alkylenoxiden umgesetzt sind.

In einer bevorzugten Ausführungsform des erfindungsgemäßen Verfahrens handelt es sich bei der Komponente (A) um mindestens ein Alken ausgewählt aus der Gruppe von Ethen, Propen, 1-Buten, 2-Buten, 1-Penten, 1-Hexen, 1-Hepten oder 1-Octen.

In einer weiteren bevorzugten Ausführungsform des erfindungsgemäßen Verfahrens handelt es sich bei der sauren Gruppe in (B) um mindestens eine Gruppe ausgewählt aus der Gruppe von Carboxylgruppen, Sulfonsäuregruppen oder Phosphonsäuregruppen.

Besonders bevorzugt handelt es sich bei Komponente (A) um Ethen und bei Komponente (B) um (Meth)acrylsäure.

In einer bevorzugten Ausführungsform des erfindungsgemäßen Verfahrens liegen 0,5 bis 80 mol % der im Copolymer vorhandenen Säuregruppen als neutralisierte Gruppen vor. Die Neutralisierung erfolgt hierbei bevorzugt durch Dispergieren des Polymeren im Lösungsmittel unter Zusatz der Base bei erhöhter Temperatur.

Als Basen werden üblicherweise eine oder mehrere basisch wirkende Substanzen, beispielsweise Hydroxide und/oder Carbonate und/oder Hydrogencarbonate von Alkalimetallen, oder vorzugsweise Amine wie beispielsweise Ammoniak und organische Amine wie beispielsweise Alkylamine, N-Alkylethanolamine, Alkanolamine und Polyamine eingesetzt.

Beispielhaft für Alkylamine seien genannt: Triethylamin, Diethylamin, Ethylamin, Trimethylamin, Dimethylamin, Methylamin. Bevorzugte Amine sind Monoalkanolamine, N,N-Dialkylalkanolamine, N-Alkylalkanolamine, Dialkanolamine, N-Alkylalkanolamine und Trialkanolamine mit jeweils 2 bis 18 C-Atomen im Hydroxyalkylrest und gegebenenfalls jeweils 1 bis 6 C-Atomen im Alkylrest, bevorzugt 2 bis 6 C-Atomen im Alkanolrest und gegebenenfalls 1 oder 2 C-Atomen im Alkylrest. Ganz besonders bevorzugt sind Ethanolamin, Diethanolamin, Triethanolamin, Methyldiethanolamin, n-Butyldiethanolamin, N,N-Dimethylethanolamin und 2-Amino-2-methylpropanol-1. Ganz besonders bevorzugt sind Ammoniak und N,N-Dimethylethanolamin. An Polyaminen seien beispielhaft genannt: Ethylendiamin, Tetramethylethylendiamin (TMEDA), Diethylentriamin, Triethylentetramin.

Die Copolymere werden nach dem Fachmann bekannten Verfahren hergestellt. Beispielsweise werden die Copolymere entsprechend den in der WO 2004/108601 A1 beschriebenen Verfahren hergestellt.

Die Mischungen aus Copolymer und wässrigem Lösungsmittelgemisch werden nach dem Fachmann bekannten Verfahren hergestellt. Beispielsweise wird das Copolymer im vorher durch Mischen erzeugten Lösungsmittelgemisch dispergiert.

Bevorzugt wird im Rahmen des erfindungsgemäßen Verfahrens das Copolymer in Form einer Formulierung mit Wasser oder einem mindestens 75 Gew.-% Wasser umfassenden wässrigen Lösemittelgemisch eingesetzt. Besonders bevorzugt ist hierbei, dass das Copolymer nur in Wasser als Lösungsmittel formuliert wird und die Konzentration des Copolymers 0,5 bis 50 Gew.-% bezüglich der Summe aller Komponenten der Formulierung beträgt.

Bevorzugt werden die wässrigen Copolymer-Dispersionen im erfindungsgemäßen Verfahren mittels Spritzen, Sprühen, Tauchen, Streichen oder elektrophoretischem Lackieren auf die metallische Oberfläche aufgebracht. Diese Verfahrensschritte können auch nacheinander mehrfach ausgeführt werden.

Im Weiteren werden die aufgebrachten wässrige Copolymer-Dispersion bevorzugt bei Temperaturen im Bereich von 20 bis 180 °C getrocknet.

Mit Hilfe des erfindungsgemäßen Verfahrens lässt sich eine Vielzahl metallischer Oberflächen beschichten. Bevorzugt enthält die metallische Oberfläche ein Metall ausgewählt aus der Gruppe von Mg, Al, Stahl, Zn oder mit Zn, Al, Ni, Sn, Cr oder deren Legierungen beschichtetem Stahl, besonders bevorzugt enthält die metallische Oberfläche das Metall Zn.

In einer weiteren Ausführungsform des erfindungsgemäßen Verfahrens wird die wässrige Copolymer-Dispersion mit einer Zwischenschicht in Kontakt gebracht wird, wobei sich die Zwischenschicht in Kontakt mit der metallischen Oberfläche befindet. Die Zwischenschicht ist bevorzugt eine Konversionsschicht, die der Passivierung der Metalloberfläche dient. Solche Schichten sind beispielsweise Cr-Konversionsschichten, Phosphatierungen, polymerbasierte Nachbehandlungen, Passivierungen, die Ti- oder Zr-Verbindungen enthalten, Metalloxid-Schichten, Layer-by-layer Schichten, Silan-vernetzte Schichten oder Öle, insbesondere Korrosionsschutzöle. Bevorzugt handelt es sich bei der Zwischenschicht um eine Cr-Konversionsschicht . Diese Konversionsschichten werden wie dem Fachmann bekannt ist aus sauren (pH 0,5 bis 5) Cr (III) oder Cr(VI) haltigen Lösungen, die ein Oxidationsmittel (wie NO₃-) enthalten, erzeugt. Dabei wird die Zn-Oberfläche minimal aufgelöst und durch den damit einhergehenden pH Anstieg an der Oberfläche bildet sich ein Cr und Zn enthaltendes oxidisch, hydroxidisches Netzwerk, das je nach Anwendungsparameter (Temperatur, pH der Lösung, Anwedungszeit) eine Schichtdicke von 20 nm bis 2 µm aufweist. Die sogenannten Chromatier- Chromitier- oder Passivierschichten sind aus dem Stand der Technik bekannt (US19810265487, DE19638176A). Es ist auch möglich, die Zwischenschicht vor der Behandlung mit der wässrigen Copolymerdispersion ganz oder teilweise zu entfernen, beispielsweise in einem alkalischen Reinigungsbad. Geölte Substrate, die nicht oder nur teilweise entfettet sind, können nach dem erfindungsgemäßen Verfahren unmittelbar mit der Copolymerdispersion behandelt werden.

In einer weiteren Ausführungsform des erfindungsgemäßen Verfahrens enthalten Copolymer-Dispersionen als eine weitere Komponente Netzmittel, Filmbildemittel, vernetzende Komponenten oder andere, von den Copolymeren abweichende, Korrosionsschutzmittel.

Den Copolymer-Dispersionen können, wie oben beschrieben, zusätzlich Filmbildehilfsmittel zugesetzt werden. Diese können Lösungsmittel oder Lösungsmittelgemische sein, insbesondere solche mit einer Verdampfungszahl nach DIN 53170 in dem Bereich von 50 - 20.000, beispielsweise Butylglycol oder Butyldiglycol. Es können aber auch nicht verdampfende Verbindungen zugesetzt werden, insbesondere Alkohole, die mit Alkylenoxiden, insbesondere Ethylen- und/oder Propylenoxid, umgesetzt wurden. Diese Alkohole können ein- oder mehrwertig sein. Diese Verbindungen können zu einer besseren Spreitung der Lösung auf der Metalloberfläche führen. Es können auch Alkoxylate von oligomeren oder polymeren Alkoholen eingesetzt werden, beispielsweise von Silikonderivaten.

Der Zusatz weiterer Komponenten ist, wie oben beschrieben, möglich, beispielsweise handelt es sich um vernetzende Komponenten wie verschiedene Silizium-Verbindungen, Nanoteilchen, Komponenten mit Epoxy- und/oder Isocyanatgruppen, sowie von den Copolymeren abweichende Korrosionsinhibitoren. Geeignete Silizium-Verbindungen sind beispielsweise Silylether und Silanole der Formel Y,X-Si-(OR)₃₋ₓ, wobei X, Y beliebige organische Reste, R = H, Alkyl und x = 0, 1. Diese Verbindungen können auch schon vorkondensierte oligomere Verbindungen oder nanoteilige Dispersionen sein.

Den Copolymer-Dispersionen können, wie oben beschrieben, zusätzlich Netzmittel zugesetzt werden. Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate. Weitere Beispiele sind insbesondere mehrfach ethoxylierte C₁₀-C₃₀-Fettalkohole oder mehrfach ethoxylierte C₁₁-C₃₁-Oxoalkohole.

Bevorzugt werden schaumarme Netzmittel eingesetzt, beispielsweise endgruppenverschlossene Ethoxylierungs- und/oder Propoxylierungsprodukte von Fettalkoholen, bei denen die alkoholische Endgruppe zu einem Ether, beipielsweise Methyl- oder Ethylether umgesetzt wurde.

Besonders bevorzugte Netzmittel sind alkoxylierte Fettalkohole der Formel (I)

R¹-(OCH₂CHR²)ₓ(OCH₂CHR³)_{y} OR⁴ (I)

- mit R¹: C₆ -C₂₄ Alkyl, linear oder verzweigt,
- R², R³: H, C₁- C₁₆ Alkyl, linear oder verzweigt,
- R⁴: H, C₁-C₈ Alkyl, linear oder verzweigt,
- x: ganze Zahl aus dem Bereich von 1 bis 200,
- y: ganze Zahl aus dem Bereich von 0 bis 80.

Die Alkylenoxid-Einheiten können in Formel (I) in einem oder mehreren Blöcken oder statistisch angeordnet sein.

Ein weiterer Gegenstand der vorliegenden Erfindung ist eine mit einem Copolymer beschichtete metallische Oberfläche, erhältlich nach einer Ausführungsform des erfindungsgemäßen Verfahrens.

In der Regel beträgt die Dicke der copolymerhaltigen Schicht auf der metallischen Oberfläche von 0,1 bis 30 µm, bevorzugt von 0,2 bis 30 µm, besonders bevorzugt von 0,5 bis 10 µm, ganz besonders bevorzugt von 1 bis 6 µm beträgt.

In einer Ausführungsform der erfindungsgemäßen beschichteten metallischen Oberfläche befinden sich auf der copolymerhaltigen Schicht weiterhin noch eine oder mehrere übereinander aufgebrachte Lackschichten.

Im Allgemeinen können die beschichteten metallischen Oberflächen eine beliebige Form annehmen. Bevorzugt handelt es sich bei den metallische Oberflächen um Oberflächen von geformten oder flächigen Körpern, besonders bevorzugt um die Oberfläche von Coils, Drähten, Röhren, Tafeln, Werkstücken, umgeformten, gefügten und/oder verbundenen Teilen.

Die Copolymer-Dispersionen können auf flächige oder geformte Metalloberflächen aufgebracht werden, beispielsweise auf Coils, Drähte, Röhren, oder andere geformte oder flächige Körper.

Bei der Verwendung von geformten Körpern werden die Copolymer-Dispersionen bevorzugt durch Tauch- oder Spritzverfahren appliziert. Die aufgebrachten Filme haben hierbei nach der Trocknung eine bevorzugte mittlere Schichtdicke in dem Bereich von 0,2 bis 30 µm, insbesondere von 0,5 bis 10 µm, ganz besonders bevorzugt von 1 bis 6 µm.

Die Trocknung kann nach verschiedenen Verfahren erfolgen. In vielen Fällen reicht eine herkömmliche Trocknung bei geringfügig erhöhter Temperatur. Bevorzugt werden die Werkstücke (geformte oder flächige Körper) für 5 bis 20 min in einem Ofen bei 80°C gelagert. Es können aber je nach Bedarf auch höhere Temperaturen im Bereich von 80 bis 180 °C und längere oder kürzere Zeiten eingestellt werden.

Ein weiterer Gegenstand der vorliegenden Erfindung ist die Verwendung von wässrigen Copolymer-Dispersionen, enthaltend eine effektive Menge organische phosphorhaltige Korrosionsinhibitoren (K1), wobei die in der Dispersion enthaltenen Copolymere aus folgenden Komponenten aufgebaut sind:
(A) von 20 bis 95 Gew. % monoethylenisch ungesättigte Kohlenwasserstoffe und/oder Kohlenwasserstoffe mit zwei konjugierten Doppelbindungen,
(B) von 5 bis 80 Gew. % monoethylenisch ungesättigte Monomere, welche Säuregruppen aufweisen und/oder deren Anhydride oder Salze
zur Beschichtung metallischer Oberflächen.

Die Menge der Komponenten (A) und (B) ist hierbei bezogen auf die Geamtmenge der Komponenten (A) und (B). Die Gesamtmenge der Komponenten (A) und (B) beträgt hierbei 100 Gew.-%. Bevorzugt liegen die Komponenten (A) im Bereich von 20 bis 95 Gew.-% und (B) im Bereich von 5 bis 50 Gew.-%.

In einer bevorzugten Ausführungsform der erfindungsgemäßen Verwendung enthalten die in der Dispersion enthaltenen Copolymere als eine weitere Komponente:
(C) von 0 bis 30 Gew. % von (A) und (B) verschiedene, ethylenisch ungesättigte Monomere.

Die Menge der Komponenten (A), (B) und (C) ist hierbei bezogen auf die Gesamtmenge der Komponenten (A), (B) und (C). Die Gesamtmenge der Komponenten (A), (B) und (C) beträgt hierbei 100 Gew.-%.

Die Gesamtmenge an organischen phosphorhaltigen Korrosionsinhibitoren (K1) liegt hierbei im Bereich von 0,1 - 20 Gew.-%, bezogen auf die Menge an Coolymeren, bevorzugt im Bereich von 0,2 - 10 %, besonders bevorzugt in dem Bereich von 0,4 - 5 Gew.-%.

Bevorzugt werden im Rahmen der erfindungsgemäßen Verwendung die wässrigen Copolymer-Dispersionen mit einer Zwischenschicht in Kontakt gebracht wobei sich die Zwischenschicht in Kontakt mit der metallischen Oberfläche befindet.

Besonders bevorzugt werden im Rahmen der erfindungsgemäßen Verwendung die Beschichtungen als sogenannte Sealer eingesetzt wobei eine Cr-Konversionsschicht als Zwischenschicht fungiert. Der Sealer führt dabei zu einer deutlichen Verbesserung der Korrosionsschutz-Eigenschaften der Cr-Konversionsschicht.

Die vorliegende Erfindung stellt verbesserte Verfahren zur Behandlung metallischer Oberflächen bereit, die insbesondere vorteilhaft bei der Passivierung von Oberflächen enthaltend Stahl und/oder Zink oder Zink-enthaltende Legierungen angewendet werden können.

Die Erfindung wird durch die Beispiele näher erläutert ohne dass die Beispiele den Gegenstand der Erfindung einschränken.

### Beispiele:

Die Polymere A und B wurden durch radikalische Hochdruckpolymerisation, wie sie zum Beispiel in EP 1636137 B1 beschrieben ist, hergestellt.

### Polymer A:

Eine wässrige Lösung von 21 Gew.-% (bezogen auf die Menge an Wasser) eines Copolymeren aus Ethylen und Acrylsäure im Gewichtsverhältnis 70:30 mit einem Molekulargewicht von ca. 30.000 D und 3,5 Gew.-% der Base Dimethylethanolamin (bezogen auf die Menge an Wasser).

### Polymer B:

Eine wässrige Lösung von 21 Gew.-% (bezogen auf die Menge an Wasser) eines Copolymeren aus Ethylen und Methacrylsäure im Gewichtsverhältnis 73:37 und einem Molekulargewicht von ca. 90.000 D und 3,5 Gew.-% der Base Dimethylethanolamin (bezogen auf die Menge an Wasser).
Additiv 1: phosphoryliertes Polypropylenoxid mit einer Molmasse von 2000 g/mol
Additiv 2: Tetrapropylenbernsteinsäureamid
Additiv 3: 6,6',6"-(1,3,5-Triazin-2,4,6-triyl-triimino)hexansäure, Triethanolamin-salz
Additiv 4: Etidronsäure

Zu den Polymeren A oder B wurden die entsprechenden Additive zugegeben und die Lösungen anschließend mindestens 3 h lang gerührt. Die Menge des gewählten Additivs in Gew.-% bezieht sich auf die Menge an eingesetztem Polymer.

Die Additive 1 und 4 wurden dazu in einer geringen Menge Wasser vorgelöst und mit einer equimolaren Menge Dimethylethanolamin versetzt. Die Menge des Wassers wurde dazu so gewählt, dass nach dem Vermischen eine Korrosionsinhibitor-haltige Polymer-Lösung mit einem Feststoffgehalt von 20 Gew.-% resultierte.

Die Additive 2 und 3 wurden unmittelbar zur Lösung des Polymeren gegeben. In jedem Fall wurde zuletzt der Feststoffgehalt auf einen Wert von 20 Gew.-% eingestellt.

Geölte, verzinkte Bleche (Abmessungen ca. 220 mm * 10 mm * 0,5 mm, Zn-Auflage 100 g/m2) wurden ca. 1 min in Ethylacetat getaucht und anschließend mit einem Papierhandtuch abgerieben.

Anschließend wurden sie für 30 sec. bei 60°C in ein Bad mit einer alkalischen Reinigungslösung gelegt (Surtec 133, 4 %ig). Daraufhin wurden sie mehrfach in ein Bad mit 60°C warmen Wasser und anschließend in ein Bad mit vollentsalztem Wasser getaucht, abtropfen gelassen und mit Druckluft abgeblasen.

Die trockenen Bleche wurden durch Auftrag der Polymerlösungen mit einer Rakel beschichtet. Die Rakel wurde dabei so gewählt, dass eine Nassfilmdicke von 12 µm entstand. Die Bleche wurden anschließend in einem Umluft-Trockenofen getrocknet (ca. 12 sec, PMT (peak metal temperature) 50°C) und anschließend bei 120°C für 1 h im Trockenofen gelagert.

Nach 48 h Lagerung im Labor wurden die Bleche einem neutralen Salzsprühnebeltest gemäß DIN EN ISO 9227 unterworfen. Die Zeit t9 in Stunden bis zum Auftreten von ersten Korrosionsspuren (Korrosionsschutzgrad < 10, gemäß EN ISO 10289:2001) wurde ermittelt.

| Beispiel | Polymer | Additiv A | Menge Additiv A (Gew.-%) | Additiv B | Menge Additiv B (Gew.-%) | t9 |
|---|---|---|---|---|---|---|
| Vergleichsbeispiel 1 | A | | | | | 24 |
| 1 | A | 1 | 1 | | | 48 |
| 2 | A | 1 | 1 | 3 | 3 | 96 |
| 3 | A | 1 | 1 | 4 | 3 | 96 |
| 4 | A | 4 | 3 | 1 | 1 | 72 |
| Vergleichsbeispiel 2 | B | | | | | 24 |
| 5 | B | 1 | 1 | | | 48 |
| 6 | B | 1 | 1 | 4 | 3 | 72 |
| 7 | B | 1 | 1 | 3 | 3 | 72 |
| 8 | B | 1 | 0,5 | 4 | 2 | 72 |
| 9 | B | 4 | 2 | 3 | 2 | 72 |

Die Menge an Additiv A oder B ist bezogen auf die Menge an Copolymer.

Die Beispiele zeigen den vorteilhaften Korrosionsschutz, der sich durch Zusatz der P-haltigen Korrosionsschutzadditive ergibt. Diese Wirkung kann noch gesteigert werden, wenn weitere Korrosionsschutzadditive der Mischung zugesetzt werden

## Patentansprüche

1. Verfahren zum Beschichten metallischer Oberflächen, bei dem man die metallische Oberfläche mit einer wässrigen Copolymer-Dispersion in Kontakt bringt, **dadurch gekennzeichnet, dass** die wässrige Copolymer-Dispersion eine effektive Menge organische phosphorhaltige Korrosionsinhibitoren (K1) enthält, und wobei die in der Dispersion enthaltenen Copolymere aus folgenden Komponenten aufgebaut sind:
(A) von 20 bis 95 Gew. % monoethylenisch ungesättigte Kohlenwasserstoffe und/oder Kohlenwasserstoffe mit zwei konjugierten Doppelbindungen,
(B) von 5 bis 80 Gew. % monoethylenisch ungesättigte Monomere, welche Säuregruppen aufweisen und/oder deren Anhydride oder Salze.

2. Verfahren nach Anspruch 1, **dadurch gekennzeichnet, dass** die in der Dispersion enthaltenen Copolymere als eine weitere Komponente:
(C) von 0 bis 30 Gew. % von (A) und (B) verschiedene, ethylenisch ungesättigte Monomeren enthalten.

3. Verfahren nach Anspruch 1 oder 2, **dadurch gekennzeichnet, dass** die Gesamtmenge an organischen phosphorhaltigen Korrosionsinhibitoren (K1) im Bereich von 0,1 - 20 Gew.-% bezogen auf die Menge an Copolymeren liegt.

4. Verfahren nach den Ansprüchen 1 bis 3, **dadurch gekennzeichnet, dass** es sich bei Komponente (A) um mindestens ein Alken ausgewählt aus der Gruppe von Ethen, Propen, 1-Buten, 2-Buten, 1-Penten, 1-Hexen, 1-Hepten oder 1-Octen handelt.

5. Verfahren nach den Ansprüchen 1 bis 4, **dadurch gekennzeichnet, dass** es sich bei der sauren Gruppe in Komponente (B) um mindestens eine Gruppe ausgewählt aus der Gruppe von Carboxylgruppen, Sulfonsäuregruppen oder Phosphonsäuregruppen handelt.

6. Verfahren nach den Ansprüchen 1 bis 5, **dadurch gekennzeichnet, dass** 0,5 bis 80 mol % der im Copolymer vorhandenen Säuregruppen neutralisiert sind.

7. Verfahren nach den Ansprüchen 1 bis 6, **dadurch gekennzeichnet, dass** man das Copolymer mittels Spritzen, Sprühen, Tauchen, Streichen oder elektrophoretischem Lackieren aufbringt.

8. Verfahren nach den Ansprüchen 1 bis 7, **dadurch gekennzeichnet, dass** es sich bei dem in der metallischen Oberfläche enthaltenen Metall um eines ausgewählt aus der Gruppe von Mg, Al, Stahl, Zn oder mit Zn, Al, Ni, Sn, Cr oder deren Legierungen beschichtetem Stahl handelt.

9. Verfahren nach den Ansprüchen 1 bis 8, **dadurch gekennzeichnet, dass** die wässrige Copolymer-Dispersion mit einer Zwischenschicht in Kontakt gebracht wird, wobei sich die Zwischenschicht in Kontakt mit der metallischen Oberfläche befindet.

10. Verfahren nach Anspruch 9, **dadurch gekennzeichnet, dass** es bei der Zwischenschicht um eine Cr-Konversionsschicht handelt.

11. Verfahren nach den Ansprüchen 1 bis 10, **dadurch gekennzeichnet, dass** Copolymer-Dispersionen als eine weitere Komponente Netzmittel, Filmbildemittel, vernetzende Komponenten oder andere, von den Copolymeren abweichende, Korrosionsschutzmittel enthalten.

12. Mit einem Copolymer beschichtete metallische Oberfläche, erhältlich nach einem Verfahren gemäß einem der Ansprüche 1 bis 11.

13. Beschichtete metallische Oberfläche gemäß Anspruch 12, wobei sich auf der copolymerhaltigen Schicht weiterhin noch eine oder mehrere übereinander aufgebrachte Lackschichten befinden.

14. Verwendung von die wässrigen Copolymer-Dispersionen, enthaltend eine effektive Menge organische phosphorhaltige Korrosionsinhibitoren (K1), wobei die in der Dispersion enthaltenen Copolymere aus folgenden Komponenten aufgebaut sind:
(A) von 20 bis 95 Gew. % monoethylenisch ungesättigte Kohlenwasserstoffe und/oder Kohlenwasserstoffe mit zwei konjugierten Doppelbindungen,
(B) von 5 bis 80 Gew. % monoethylenisch ungesättigte Monomere, welche Säuregruppen aufweisen und/oder deren Anhydride oder Salze
zur Beschichtung metallischer Oberflächen.

15. Verwendung nach Anspruch 14, wobei die wässrige Copolymer-Dispersion mit einer Zwischenschicht in Kontakt gebracht wird und sich die Zwischenschicht in Kontakt mit der metallischen Oberfläche befindet.
